(19) Europäisches Patentamt
European Patent Office
Office européen des brevets

(11) Publication number: 0 382 205 A2

# (12) EUROPEAN PATENT APPLICATION

(21) Application number: 90102480.2

(51) Int. Cl.[5]: C08F 8/30, C08F 8/44

(22) Date of filing: 08.02.90

(30) Priority: 10.02.89 JP 32198/89
28.04.89 JP 109500/89
31.07.89 JP 199113/89

(43) Date of publication of application:
16.08.90 Bulletin 90/33

(84) Designated Contracting States:
DE FR GB

(71) Applicant: NIPPON ZEON CO., LTD.
6-1, 2-chome, Marunouchi, Chiyoda-ku
Tokyo(JP)

(72) Inventor: Kawanaka, Takafumi
2-15-33, Isogo, Isogo-ku
Yokohama-shi, Kanagawa-ken(JP)
Inventor: Watanabe, Hiroyuki
669-8, Izumi-cho, Izumi-ku
Yokohama-shi, Kanagawa-ken(JP)
Inventor: Noguchi, Kohkichi
2-26-1-106, Kajiwara
Kamakura-shi, Kanagawa-ken(JP)
Inventor: Kitahara, Shizuo
1-3-11, Shibatsukahara
Kawaguchi-shi, Saitama-ken(JP)

(74) Representative: Kraus, Walter, Dr. et al
Patentanwälte Kraus, Weisert & Partner
Thomas-Wimmer-Ring 15
D-8000 München 22(DE)

## (54) Additive for thermosetting resins and thermosetting resin composition containing additive.

(57) An additive for thermosetting resins, said additive comprising a compound having in the molecule an atomic grouping containing the $>C_N^{\oplus}<$ bond; and a thermosetting resin composition comprising a thermosetting resin and an effective amount of said additive.

EP 0 382 205 A2

This invention relates to an additive for thermosetting resins, and to a thermosetting resin composition comprising this additive.

Since a thermoplastic resin forms a three-dimensional crosslinked structure by a curing reaction, it has high thermal resistance and strength. By taking advantage of this property, phenolic resins and melamine resins have long been used in decorative boards and printed wiring boards. Epoxy resins have widely been used as paints, adhesives and semiconductor encapsulating agents. In recent years, the use of thermoplastic resins has been expanded in the fields of automobile parts, electrical component parts and electronical component parts, etc. Furthermore, unsaturated polyester resins, when reinforced with glass fibers and cured, give cured articles having excellent mechanical strength, and are therefore been used in various fields as structural materials and fiber-reinforced plastics (FRP).

The thermosetting resins, however, have the common defect that various defects occur owing to shrinkage during curing, and specifically, the dimensional accuracy may deviate from the desired one or internal stresses may occur.

It is said that the formation of the "sea-island structure" is effective for reducing internal stresses in the thermosetting resin. It is also said that to reduce internal stresses by forming the sea-island structure, (1) the reduction of the particle size of the domain, (2) imparting of a domain/matrix interaction and (3) crosslinking of the interior of the domain are important.

To solve the above problems of thermosetting resins, it was proposed to add agents for reducing shrinkage, for example a styrene/butadiene block copolymer (U. S. Patents Nos. 3,857,812, 3,882,087 and 3,989,789), poly(methyl methacrylate), polyvinyl acetate and a styrene/acrylonitrile copolymer (U. S. Patent No. 3,503,921, CA 820,399 and GB 936,351).

However, the addition of these agents cannot sufficiently circumvent the various problems attributed to the curing shrinkage of thermosetting resins, and a further improvement is required.

It is an object of this invention to provide a novel additive for inhibiting curing shrinkage of a thermosetting resin and to a novel thermosetting resin composition containing this additive.

This object of the invention is achieved by an additive for a thermosetting resin, said additive comprising a compound having in the molecule an atomic grouping containing the $>C=\overset{\oplus}{N}<$ bond, and a thermosetting resin composition comprising a thermosetting resin and an effective amount of the additive.

The additive of this invention is a compound containing in the molecule an atomic grouping having the $>C=\overset{\oplus}{N}<$ bond.

Examples of the compound having the $>C=\overset{\oplus}{N}<$ bond in the molecule are compounds having a heterocyclic structure represented by the following formulae (1a) to (5b) (compounds A), and the reaction products (compounds B) formed by the reaction of an oligomer or polymer having an alkali metal or an alkaline earth metal bonded thereto with a compound which forms the $>C=\overset{\oplus}{N}<$ bond upon reaction with the oligomer or polymer.

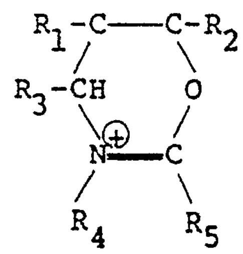

(1a)

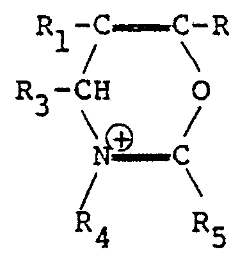

(1b)

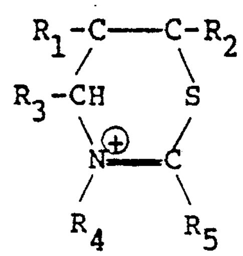

(2a)

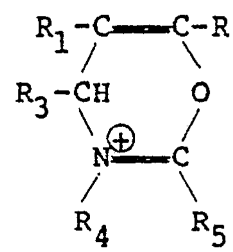

(2b)

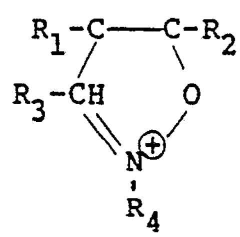

(3a)

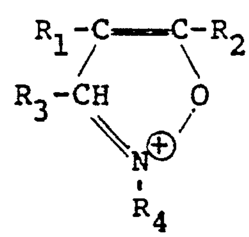

(3b)

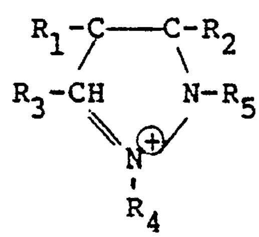

(4a)

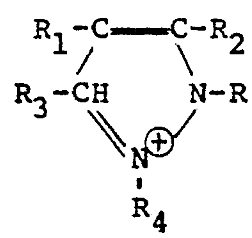

(4b)

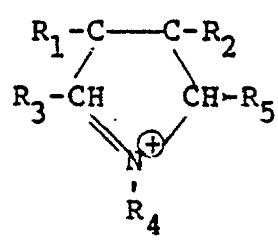

(5a)

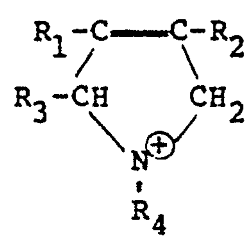

(5b)

In the above formulae $R_1$ represents the main chain of the compound, $R_2$ represents the main chain of the compound, a hydrogen atom or a hydrocarbon group having not more than 6 carbon atoms, $R_3$ to $R_5$ may be identical or different and represent a hydrocarbon group, and $R_1$ to $R_5$ may be at least partly substituted by a substituent such as a halogen atom, a nitro group, an epoxy group, a carboxyl group or a hydroxy ether group.

Some examples of the method of producing compounds A are shown below. It should be understood however that the invention are not limited to these specific methods.

The starting material is a polymer having a carbon-carbon double bond which is soluble in precursors of thermosetting resins and in curing agents, curing promoters and other substances such as radical-polymerizable monomers which are to be added to the precursors. Specific examples include polymers and copolymers of conjugated dienes such as butadiene and isoprene; copolymers of conjugated dienes and monomers copolymerizable therewith (for example, aromatic vinyl compounds such as styrene, unsaturated nitrile compounds such as acrylonitrile, unsaturated carboxylic acids such as acrylic acid, methacrylic acid, maleic acid and maleic anhydride, esters of these unsaturated carboxylic acids, and alpha-olefins such as ethylene, propylene and isobutylene; polymers, copolymers of dicyclopentadiene or ethylidenenorbornene and partially hydrogenated products of such polymers or copolymers; and polyisobutylene, polybutene, ethylene/propylene/diene monomer copolymers, and macromers such as polyethylene glycol dimethacrylate, polyethylene glycol alllylate, polypropylene glycol dimethacrylate, polypropylene glycol diacrylate, polystyrene dimethacrylate and polystyrene allylate.

Method (1)

The unsaturated polymers described above are reacted with organic compound (1) represented by the general formula $R_6$-CH=N-$R_7$ in which $R_6$ and $R_7$ represent an organic atomic grouping and organic acid halides in the presence of Lewis acids. The organic compounds (1) are more specifically compounds of the above formula in which $R_6$ and $R_7$ represent aliphatic, alicyclic or aromatic residues (these residues may optionally have an atomic grouping such as an alkoxy group, a cyano group, a carboxyl group or a dialkylamino group). Specific examples of the organic compound (1) are benzylidene methylamine, benzylidene butylamine, benzylideneaniline, benzylidene cyclohexylamine, propylidene aniline, ethoxybenzylidene butylamine, 4-carbomethoxybenzylidene butylaniline, benzylidene 4-cyanoaniline and dimethylaminobenzylidene butylaniline. Specific examples of the organic acid halides are acetyl chloride, acetyl bromide, benzoyl chloride, acryloyl chloride, carbomethoxybenzoyl chloride, cinnamoyl chloride and methacryloyl chloride. Examples of the Lewis acids are $BF_3$, $BF_3O(C_2H_5)_2$, $AlCl_3$, $TiCl_4$, $SnCl_4$, $SbCl_5$, and $AgBF_4$.

There is no particular restriction on the reaction conditions. The reaction may be carried out in an inert solvent such as benzene, toluene or cyclohexane at 20 to 80 °C for about 1 to 2 hours. These reaction conditions can be usually employed with good results. The amounts of the organic compound (1) and the organic acid halide are usually about 1 to 1.5 moles per mole of the unsaturated compound, respectively. The amount of the Lewis acid used is about 0.1 to 1 mole per mole of the organic ascid halide. If the unsaturated compound is a polymer, the amounts of the organic compound (1) and the organic acid halide are usually about 0.1 to 30 parts by weight respectively per 100 parts by weight of the polymer.

Method (2)

This method comprises reacting the above unsaturated polymer with an N-hydroxymethylamide compound (N-methylol compound) in the presence of a Friedel-Crafts catalyst and further reacting the product with an alkyl halide, dimethyl sulfate or methyl p-toluenesulfonate to perform N-alkylation.

The N-hydroxy methylamide compound is a reaction product between an amide compound and an aldehyde compound. The aldehyde compound may be, for example, an aliphatic or aromatic aldehyde such as formaldehyde, butyraldehyde, valeraldehyde or benzaldehyde. Examples of the amide compound are acetamide, benzamide, methoxybenzamide, nitrobenzamide, N-methylbenzamide, butyramide, phthalic acid amide, and glutaric acid amide. A copolymer containing N-methylolacrylamide as one monomer component may be used as the N-hydroxymethylamide compound.

Examples of the alkyl halide are benzylbromide, benzyl chloride, bromohexane, bromopropane, 2-chloroethyl ether, chloromethyl ether and chloropentane.

Any generally known Friedel-Crafts catalysts can be used in this method. Typical examples include halogen compounds of metal or semimetals, for example, halogen compounds of elements such as B, Al, Si, P, Ti, V, Fe, Zn, Mo, Sn, Sb, Te and W, and halogen compound, organic halogen compounds of oxygen-element bonded compounds such as PO, $SO_2$ and VO, and complexes of these. More specific examples are $BF_3$, $BF_3O(C_2H_5)_2$, $BCl_3$, $AlC_3$, $TiCl_4$, $SnCl_4$, $FeCl_3$, $POCl_3$ and $(C_2H_5)Al$. The reaction conditions are not particularly limited [for details, see C. Giordano et al., SYNTHESIS, 92 (1971)].

Method (3)

This method comprises reacting the above unsaturated polymer with a halohydroximino compound in the presence of, as a dehydrochlorinating agent, an inorganic base such as $NaNH_2$, KOH or anhydrous sodium carbonate or an organic base such as pyridine, triethylamine, quinoline or piperidine, and further reacting the product with an alkyl halide, dimethyl sulfate or methyl p-toluene-sulfonate to perform N-methylation.

The halohydroximino compound may be obtained by reacting the alpha-haloaceto compound described in T. L. Gilchrist et al., J. C. S. Chem. Commun., 1090 (1979) with hydroxylamine hydrochloride, or by reacting a vinyl compound such as acrolein, acrylic esters or alpha-methylstyrene described in K. A. Ogloblin et al., J. Org. Chem., U.S.S.R. 1, 1370 (1965).

From the viewpoint of the ease of production, the compounds A preferably have a 1,3-oxazine structure or an isoxasole structure.

The compound B can be obtained by reacting (1) a living anionic polymer having the metal to be described below obtained by polymerizing a polymerizable monomer using an alkali metal and/or an alkaline earth metal-base catalyst (so-called anionic polymerization catalyst; or (2) a polymer obtained by addition of the above metal to an unsaturated polymer having a double bond in the polymer chain or the side chain by after-reaction, with an organic compound to be described below, and then hydrolyzing the product (U. S. Patent Nos. 4,550,142 and 4,647,625).

The metal-base polymerization catalysts may be those which have heretofore been used for anionic polymerizations, and are not particularly limited. Typically, organolithium compounds having 2 to 20 carbon atoms, such as n-butyllithium and sec-butyllithium may be cited as examples of the alkaline metal-base catalysts. Examples of the alkaline earth metal-base catalysts are catalysts composed mainly of compounds of barium, strontium or calcium which are dislosed in U. S. Patents Nos. 3846385, 3992561, 4079176, 4092268, 4112210, 4129705, 4260519 and 4297240. The polymerization reaction and the reaction of adding an alkali metal and/or an alkaline earth metal are carried out in the hydrocarbon solvents heretofore used in anionic polymerizations or in solvents which do not destroy the metal-base catalysts, such as tetrahydrofuran, tetrahydropyran and dioxane.

Examples of the organic compound to be used for reaction with the above polymers include compounds having the $-\underset{\underset{X}{\|}}{C}-N<$ bond (X is an oxygen or sulfur atom) such as

N-substituted lactams such as N-methyl-beta-propiolactam, N-t-butyl-beta-propiolactam, N-phenyl-beta-propiolactam, N-methoxyphenyl-beta-propiolactam, N-naphthyl-beta-propiolactam, N-methyl-2-pyrrolidone, N-t-butyl-2-pyrrolidone, N-phenyl-2-pyrrolidone, N-methoxyphenyl-2-pyrrolidone, N-vinyl-2-pyrrolidone, N-benzyl-2-pyrrolidone, N-naphthyl-2-pyrrolidone, N-methyl-5-methyl-2-pyrrolidone, N-t-butyl-5-methyl-2-pyrrolidone, N-phenyl-5-methyl-2-pyrrolidone, N-methyl-3,3'-dimethyl-2-pyrrolidone, N-t-butyl-3,3'-dimethyl-2-pyrrolidone, N-phenyl-3,3'-dimethyl-2-pyrrolidone, N-methyl-2-piperidone, N-t-butyl-2-piperidone, N-phenyl-2-piperidone, N-methoxyphenyl-2-piperidone, N-vinyl-2-piperidone, N-benzyl-2-piperidone, N-naphthyl-2-piperidone, N-methyl-3,3'-dimethyl-2-piperidone, N-phenyl-3,3'-dimethyl-2-pyrrolidone, N-methyl-epsilon-caprolactam, N-phenyl-epsilon-caprolactam, N-methoxyphenyl-epsilon-caprolactam, N-vinyl-epsilon-caprolactam, N-benzyl-epsilon-caprolactam, N-naphthyl-epsilon-caprolactam, N-methyl-omega-laurilolactam, N-t-butyl-omega-laurilolactam, N-vinyl-omega-laurilolactam and N-benzyl-omega-laurilolactam, and the corresponding thiolactams; N-substituted cyclic ureas such as 1,3-dimethyl-2-imidazolidinone, 1,3-diethyl-2-imidazolidinone, 1-methyl-3-ethyl-2-imidazolidinone, 1-methyl-3-ethyl-2-imidazolidinone, 1,3-dimethylethyleneurea, 1,3-diphenylethyleneurea, 1,3-di-t-butylethyleneurea and 1,3-divinylethyleneurea, and the corres ponding N-substituted thiocyclic ureas; N-substituted aminoketones such as 4-dimethylaminobenzophenone, 4-diethylaminobenzophenone, 4-di-t-butylaminobenzophenone, 4-diphenylbenzophenone, 4,4'-bis(dimethylamino)benzophenone, 4,4'-bis(diethylamino)benzophenone, 4,4'-bis(di-t-butylamino)benzophenone, 4,4'-bis(diphenylamino)benzophenone, 4,4'-bis(divinylamino)benzophenone, 4-dimethylaminoacetophenone, 4-diethylaminoacetophenone, 1,3-bis(diphenylamino)-2-propanone and 1,7-bis-

(methylethylamino)-4-heptanone, and the corresponding N-substituted aminothioketones; and N-substituted aminoaldehydes such as 4-dimethylaminobenzaldehyde, 4-diphenylaminobenzaldehyde and 4-divinylaminobenzaldehyde, and the corresponding N-substituted aminothioaldehydes.

The amount of these organic compounds is preferably 0.05 to 10 moles per mole of the alkali metal and/or alkaline earth metal based catalyst used at the time of anionic polymerization or adding the metal to polymers by after reaction. If it is less than 0.05 mole, the curing shrinkage can only be improved insufficiently. If it exceeds 10 moles, the resulting polymer is difficult to dissolve owing to a side-reaction. The more preferred amount is in the range of 0.2 to 2 moles. Usually, the reaction proceeds at room temperature to 100 °C in several seconds to several hours. After the reaction, the polymer having the above functional group bonded thereto can be recovered by steam stripping from the reaction solution after the end of the reaction.

When 4,4′-bis(diethylamino)benzophenone is used, the above reaction is illustrated by the following reaction formula.

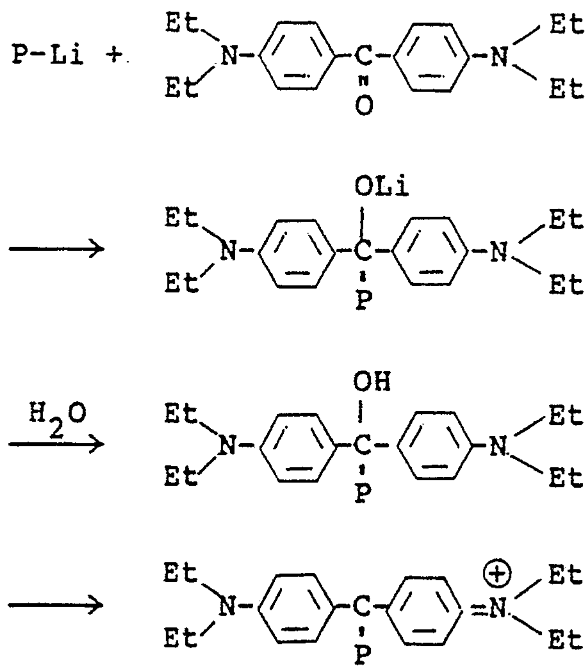


In the above formula, P represents a polymer chain and P-Li represents an Li-terminated polymer.

Conjugated diene polymers having the above functional groups bonded to one or both ends of the polymer chain are especially preferred as the additive of this invention. Examples of the conjugated dienes are homopolymers and copolymers of conjugated dienes such as butadiene, isoprene, pentadiene and chloroprene; and copolymers of at least one conjugated diene and at least one monomer copolymerizable with it (for example, aromatic vinyl compounds such as styrene, vinyltoluene and alpha-methylstyrene, unsaturated nitrile compounds such as acrylonitrile and methacrylonitrile, unsaturated carboxylic acids such as acrylic acid, methacrylic acid, maleic acid and maleic anhydride, and unsaturated carboxylic acid esters such as methyl acrylate, ethyl acrylate, butyl acrylate and methoxyethyl acrylate). These examples are not limitative. Depending upon the type of the thermosetting resin, optimal additives may be selected.

The method of producing the additive of the invention has been exemplified hereinabove. The monomer composition and molecular weight of the polymer provided as the additive may be selected according to the type of the thermosetting resin for which the additive polymer is used. The molecular weights of polymers as additives of this invention are neither limited in particular. They may include polymers with a variety of molecular weights ranging from oligomers to high-molecular-weight (several hundred thousands in weight average molecular weight) solid polymers.

When the solubility and mixability of the additive in and with the prepolymer of the thermosetting resin before curing are considered, the additive preferably has a (weight average molecular weight)/(the number of functional groups per molecule) value of not more than 200,000, more preferably not more than 100,000, especially preferably not more than 10,000. With the additives having this value of not more than 3,000, the effect of the invention is insufficient.

The amount of the additive of this invention varies depending upon its type, molecular weight, the

number of functional groups it has, the type of the thermosetting polymer to which it is added, and the purpose of improvement. Usually, its amount is 0.5 to 100 parts by weight, preferably 5 to 50 parts by weight, per 100 parts by weight of the thermosetting polymer.

Examples of the thermosetting resins used in this invention include unsaturated polyester resins, phenolic resins, xylene resins, urea resins, melamine resins, alkyd resins, epoxy resins, silicone resins and furan resins. Partially modified thermosetting resin may naturally be used in this invention according to the purpose of use.

Various fillers may be incorporated in the composition of this invention. Examples include calcium carbonate, silica, mica, clay, carbon black and glass fibers.

Thus, according to this invention, shaped articles of thermosetting resins having a lower curing shrinkage and less internal stresses than in the prior art with inhibited occurrence of defects can be produced.

The following examples will illustrate the present invention more specifically. All parts and percentages in the following examples are by weight.

## EXAMPLE 1

### Production of an additive

Two hundred grams of A-B type styrene/butadiene block copolymer (styrene 67 %; weight average molecular weight 120,000) was dissolved in 1.5 liters of dehydrated benzene. The solution was stirred in a closed glass vessel (separable flask) in a nitrogen atmosphere at 45 °C, the compounds I, II and the Lewis acid indicated in Table 1 were added each as a benzene solution, and were reacted for 1 hour. Then, the reaction solution was poured into 3 liters of methanol to coagulate the polymer completely. The coagulum was separated as fine fragments, and washed. Then, the fine fragments of the coagulum were immersed in a 2 % methanol solution of 2,6-di-t-butyl-p-cresol, washed, and then dried under reduced pressure at 60 °C for 24 hours to obtain a styrene/butadiene block copolymers (additives) A, B, C and D having an oxazine structure. The weight average molecular weights of these polymers were determined under the following conditions (calculated for standard polystyrene).

Column: GMH-6, two columns (made by Toso Co., Ltd.)
Temperature: 38 °C
Flow rate: 1.2 ml/min.

The presence of $>C=\overset{\oplus}{N}<$ bond was determined by the presence or absence of an ultraviolet absorption spectrum in 310-315 nm and a visible light absorption spectrum at 360 nm.

The same methods were used in the following examples.

Table 1

| Additive | Compound I | | Compound II | | Lewis acid | |
|---|---|---|---|---|---|---|
| | Type | Amount (mM) | Type | Amount (mM) | Type | Amount (mM) |
| A | benzylidene butylamine | 15.0 | acetyl chloride | 16.0 | $SnCl_4$ | 15.0 |
| B | benzylidene stearylamine | 18.8 | benzoyl chloride | 19.6 | $TiCl_4$ | 18.8 |
| C | benzylidene methylamine | 56.0 | acetyl chloride | 61.0 | $SnCl_4$ | 56.0 |
| D | - | - | - | - | - | - |

### Production of an unsaturated polyester resin

Neopentylglycol 760 g and 410 g of isophthalic acid were reacted at 210 °C for 10 hours in a stream of an inert gas. Then, 620 g of propylene glycol and 1440 g of fumaric acid were added, and reacted at 200 °C for 15 hours to give an unsaturated polyester resin. The oxidation number of the resulting unsaturated polyester resin was 32.

Production of an unsaturated polyester resin composition

Thirty parts of additive A, B, C or D, 70 parts by weight of the unsaturated polyester resin, 150 parts of styrene and 1 part of t-butyl perbenzoate were sufficiently mixed with stirring to prepare an unsaturated polyester resin composition.

Determination of phase separation

A portion of the unsaturated polyester resin was transferred to a beaker and allowd to stand at room temperature. The time which elapsed until the additive phase-separated onto the surface of the beaker was measured, and the results are shown in Table 2.

Table 2

| Run No. | | Additive | Time until phase separation occurred (hours) |
|---|---|---|---|
| Invention | 1 | A | 150 |
| | 2 | B | 135 |
| | 3 | C | 175 |
| Comparison | 4 | D | 15 |

EXAMPLE 2

By using the additives and the unsaturated polyester shown in Example 1, sheet molding compounds (SMC) were prepared in accordance with the compounding recipe shown in Table 3, and molded at 120 °C under a pressure of 100 $kg/cm^2$. Smooth molded articles without surface unevenness were obtained. The surface smoothness by visual observation and the linear shrinkages are shown in Table 4.

Table 3

| Compounding recipe | Amount (parts) |
|---|---|
| Unsaturated polyester resin (50 % styrene solution) | 70 |
| Additive (30 % styrene solution) | 30 |
| t-Butyl perbenzoate | 1 |
| Zinc stearate | 3 |
| Calcium carbonate | 150 |
| Magnesium oxide | 1 |
| Blue inorganic pigment | 8 |

Table 4

| Run No. | | Additive | Linear shrinkage (%) | Surface smoothness (*) |
|---|---|---|---|---|
| Invention | 5 | A | 0.06 | ◎ |
| | 6 | B | 0.05 | ◎ |
| | 7 | C | 0.08 | O |
| Comparison | 8 | D | 0.5 | X |

(*) The evaluations were on the following scale.
◎ : excellent surface smoothness
O : good surface smoothness
X : inferior surface smoothness

EXAMPLE 3

Two hundred grams of styrene resin (the amount of styrene 97 %; the amount of butadiene 3 %; the weight average molecular weight 70,000) prepared by usual anionic polymerization was dissolved in 1.5 liters of dehydrated benzene, and while the solution was stirred in a closed glass vessel (separable flask) under an atmosphere of nitrogen, the compounds I, II and III indicated in Table 5 were added respectively as a benzene solution, and reacted for 1 hours. Then, the reaction solution was poured into 3 liters of methanol to coagulate the resin completely. The coagulum was separated as fine fragments, and washed. Then, the fine fragments of the coagulum were immersed in a 2 % methanol solution of 2,6-di-t-butyl-p-cresol, washed, and then dried at 60 °C for 34 hours under reduced pressure to give styrene resins E, F and G as additives.

In the same way as in Example 1, unsaturated polyester resin compositions were prepared and the times which elapsed until phase separation occurred were measured, and as in Example 2, molded products from the compositions were prepared, and their surface smoothnesses were determined by visual observation. The results are shown in Table 6.

Table 5

| Additive | Compound I | | Compound II | | Lewis acid | |
|---|---|---|---|---|---|---|
| | Type | Amount (mM) | Type | Amount (mM) | Type | Amount (mM) |
| E | benzylidene butylamine | 300 | benzoyl chloride | 360 | $SnCl_4$ | 300 |
| F | benzylidene aniline | 1000 | acetyl chloride | 1200 | $TiCl_4$ | 1000 |
| G | - | - | - | - | - | - |

Table 6

| Run No. | | Additive | Time until phase separation occurred (hours) | Surface smoothness* |
|---|---|---|---|---|
| Invention | 9 | E | 185 | ◎ |
| | 10 | F | 155 | ◎ |
| Comparison | 11 | G | 20 | X |

* The same as the footnote to Table 4.

EXAMPLE 4

150 g of a partial hydrogenation product SEBS (the amount of styrene 34 %; the iodine number 5; the weight average molecular weight 70,000, styrene-butadiene-styrene block copolymer) was dissolved in 1.5 liters of dehydrated benzene. While the solution was stirred at 45 °C in a closed glass vessel (separable flask) under an atmosphere of nitrogen, 150 mM of benzylidene stearylamine, 170 mM of acetyl chloride and 150 mM of $SnCl_4$ were added and reacted for 1 hour. Then, the reaction solution was poured into 3 liters of methanol to coagulate the resin completely. The coagulum was separated as fine fragments, and washed. The fine fragments of the coagulum was immersed in a 2 % methanol solution of 2,6-di-t-butyl-p-cresol, washed, and then dried under reduced pressure at 60 °C for 24 hours to obtain a copolymer H as an additive.

As in Example 1, an unsaturated polyester resin composition was prepared. The time which elapsed until phase separation occurred in this composition was 150 hours. A molded article was prepared from the composition as in Example 2. The surface smoothness of the molded article was excellent.

EXAMPLE 5

Production of additives

A 2-liter stainless steel polymerization reactor was washed and dried, and purged with dry nitrogen. Thereafter, 50 g of 1,3-butadiene, 100 g of styrene, 820 g of benzene, 0.5 mole of diethylene glycol dimethyl ether and 1.3 millimoles of n-butyllithium were added, and the mixture was subjected to polymerization at 40 °C for 1 hour with stirring. After the completion of the polymerization reaction, 1.0 millimole of each of the modifiers indicated in Table 7 was added, and the mixture was stirred for 10 minutes. Then, the polymer solution in the reactor was transferred to a 2.0 % methanol solution of 2,6-di-t-butyl-p-cresol to coagulat the polymer formed, and the polymer was dried at 60 °C for 24 hours under reduced pressure. Thus, styrene/butadiene copolymers (weight average molecular weight 90,000) I to Q were obtained as additives.

Production of unsaturated polyester resin compositions

Unsaturated polyester resin compositions were prepared by mixing 30 parts of each of the additives obtained above, 70 parts of the unsaturated polyester resin produced in Example 1, 150 parts of styrene and 1 part of t-butyl perbenzoate with sufficient stirring.

Determination of phase separation

A portion of each of the above unsaturated polyester resin compositions was transferred to a beaker, and left to stand at room temperature. The time which elapsed until phase separation of the additive on the surface of the beaker occurred was measured. The results are shown in Table 7.

Table 7

| Run No. | | Additive | Modifier | Time until phase separation occurred (hours) |
|---|---|---|---|---|
| Invention | 12 | I | N-methylpyrrolidone | 155 |
| | 13 | J | N-phenylpyrrolidone | 120 |
| | 14 | K | N-methylpiperidone | 150 |
| | 15 | L | N-methyl-epsilon-caprolactam | 145 |
| | 16 | M | 4,4′-bis(diethylamino)benzophenone | 130 |
| | 17 | N | 4-diethylaminobenzophenone | 120 |
| | 18 | O | 1,3-dimethylimidazolidinone | 135 |
| | 19 | P | N-diethylaminobenzaldehyde | 115 |
| Comparison | 20 | Q | none | 15 |

EXAMPLE 6

By using the additives of Example 5 and the unsaturated polyester resin of Example 1, sheet molding compounds were prepared in accordance with the compounding recipe shown in Table 8, and molded at 150 °C under a pressure of 100 kg/cm$^2$ for 3 minutes. The resulting molded articles were smooth without surface unevenness. The surface smoothnesses of the molded articles determined by visual observation and the linear shrinkages of the molded articles are shown in Table 9.

Table 8

| Compounding recipe | Amount (parts) |
|---|---|
| Unsaturated polyester resin (50 % styrene solution) | 70 |
| Additive (30 % styrene solution) | 30 |
| t-Butyl perbenzoate | 1 |
| Zinc stearate | 3 |
| Calcium carbonate | 150 |
| Magnesium oxide | 1 |
| Blue inorganic pigment | 8 |

Table 9

| Run No. | | Additive | Linear shrinkage (%) | Surface smoothness* |
|---|---|---|---|---|
| Invention | 21 | I | 0.05 | ◎ |
| | 22 | J | 0.06 | ◎ |
| | 23 | K | 0.05 | ◎ |
| | 24 | L | 0.08 | ◎ |
| | 25 | M | 0.10 | O |
| | 26 | N | 0.04 | ◎ |
| | 27 | O | 0.08 | O |
| | 28 | P | 0.08 | O |
| Comparison | 29 | Q | 0.5 | X |

* Same as the footnote to Table 4.

## EXAMPLE 7

### Production of additives

A 2-liter stainless steel polymerization reactor was washed, dried and purged with dry nitrogen, and then 150 g of monomers indicated in Table 10, 820 g of benzene and n-butyllithium in the amount indicated in Table 10 were added. With stirring, the mixture was subjected to polymerization at 60 °C for 3 hours. After the completion of the polymerization, each of the modifiers shown in Table 10 was added in an equimolar amount with respect to the n-butyllithium. The reaction was carried out for 30 minutes with stirring. Then, 10 ml of methanol was added to stop the reaction. The polymer solution was transferred to a 2 % methanol solution of 2,6-di-t-butyl-p-cresol to coagulate the resulting polymer. The coagulated polymer was dried under reduced pressure. Thus, additives R to W were obtained.

The microstructures and the weight average molecular weights of the additive polymers were measured, and the results are shown in Table 11.

TABLE 10

| Additive | Monomer (g) | | n-butyl lithium (mmol) | Modifier |
|---|---|---|---|---|
| | styrene | butadiene | | |
| R | 0 | 150 | 30 | 4,4′-bis-(diethylamino)benzophenone |
| S | 70 | 80 | 30 | ditto |
| T | 0 | 150 | 50 | ditto |
| U | 0 | 150 | 50 | N-methylpyrrolidone |
| V | 0 | 150 | 50 | none |
| W | 70 | 80 | 50 | none |

Table 11

| Additive | Polymer structure | | | | |
|---|---|---|---|---|---|
| | Styrene content (%) | Microstructure of the butadiene portion (%)* | | | Weight average molecular weight ($10^3$) |
| | | cis | trans | vinyl | |
| R | 0 | 30 | 56 | 14 | 8 |
| S | 47 | 31 | 57 | 12 | 7 |
| T | 0 | 30 | 57 | 13 | 4 |
| U | 0 | 31 | 56 | 13 | 4 |
| V | 0 | 31 | 56 | 13 | 4 |
| W | 47 | 31 | 57 | 12 | 4 |

* Determined by the Hampton method.

## Production of epoxy resin compositions

In accordance with the compounding recipe shown in Table 12, epoxy resin compositions were prepared using the additives R to W and the additives X, Y and Z (acrylonitrile/butadiene copolymers).

Table 12

| Ingredient | Amount (parts) |
|---|---|
| Epoxy resin (bisphenol A-type epoxy resin having an epoxy equivalent of 185 to 195 eq/g) | 100 |
| Additive | 25 |
| Hexahydrophthalic anhydride | 80 |
| 2-Ethyl-4-methylimidazole | 1.8 |

## Evaluation of cured articles

The resulting epoxy resin compositions were each cured by heating at 100 °C for 2 hours and then at 150 °C for 2 hours. The cured articles were each heat-treated at 50 °C for 24 hours and then immersed in water at 25 °C for 24 hours. Weight changes of the articles were measured, and percent water absorptions were determined.

Table 13 shows that the compositions in accordance with this invention have an improving effect in shrinkage and water absorption.

Table 13

| Run No. | | Additive | Volume shrinkage (%) | Water absorption (%) |
|---|---|---|---|---|
| Invention | 30 | R | 1.0 | 0.3 |
| | 31 | S | 1.0 | 0.3 |
| | 32 | T | 0.8 | 0.3 |
| | 33 | U | 0.6 | 0.3 |
| Comparison | 34 | V | 4.5 | 0.6 |
| | 35 | W | 4.0 | 0.6 |
| | 36 | X* | 2.5 | 0.4 |
| | 37 | Y** | 2.5 | 0.5 |
| | 38 | Z*** | 3.0 | 0.5 |

*: Carboxyl-terminated butadiene/acrylonitrile copolymer (Hycar CTBN-1008USP; number average molecular weight 3500, a product of Ube Industries Co., Ltd.)
**: Carboxyl-containing monomer/butadiene/acrylonitrile terpolymer (Nipol DN-601, number average molecular weight 3500, a product of Nippon Zeon Co., Ltd.)
***: Butadiene/acrylonitrile copolymer (Nipol 1312, number average molecular weight 3500, a product of Nippon Zeon Co., Ltd.)

## Claims

1. An additive for thermosetting resins, said additive comprising a compound having in the molecule an atomic grouping containing the $>C=\overset{\oplus}{N}<$ bond.

2. The additive of claim 1 in which said compound is an oligomer or a polymer.

3. The additive of claim 1 in which said compound is a heterocyclic ring-containing compound.

4. The additive of claim 1 in which said compound is a reaction product formed between an oligomer or polymer having an alkali metal or an alkaline earth metal bonded thereto and a compound which forms the $>C=\overset{\oplus}{N}<$ bond by reaction with it.

5. The additive of claim 3 in which the heterocyclic ring-containing compound is a reaction product obtained by reacting an oligomer or polymer having a carbon-carbon double bond in the molecule, a compound having the $CH=N-$ bond in the molecule, and an organic acid halide in the presence of a Lewis acid.

6. The additive of claim 4 in which the compound which forms the $>C=\overset{\oplus}{N}<$ bond is selected from the group consisting of compounds having a bond of the general formula

$$-\underset{\underset{X}{\|}}{C}-N-<$$

wherein X represents an oxygen or sulfur atom, N-substituted aminoaldehydes, N-substituted aminothioaldehydes, N-substituted aminoketones and N-substituted aminothioketones.

7. A thermosetting resin composition comprising a thermosetting resin and an effective amount of the additive of claim 1.